# EUROPÄISCHE PATENTANMELDUNG

(11) **EP 3 719 026 A1**
(43) Veröffentlichungstag der Anmeldung: **07.10.2020**
(21) Anmeldenummer: 20164049.7
(22) Anmeldetag: 18.03.2020
(51) Int. Cl.: C07F 9/6506, C07F 9/54, C07F 9/66, C07F 9/90, C07F 9/94

(54) **VERFAHREN ZUR FLUORIERUNG ANORGANISCHER VERBINDUNGEN**

(30) Priorität: 01.04.2019 DE 102019108416
(71) Anmelder: Westfälische Wilhelms-Universität Münster, 48149 Münster (DE)
(72) Erfinder: Dielmann, Fabian, 48149 Münster (DE); Buß, Florenz, 46325 Borken (DE)
(74) Vertreter: Michalski Hüttermann & Partner Patentanwälte mbB

(57) **Zusammenfassung**

Die vorliegende Erfindung betrifft ein neuartiges Verfahren zur Herstellung anorganischer fluorierter Verbindungen durch Umsetzung mit SF₅⁻ Salzen.

## Beschreibung

Die vorliegende Erfindung bezieht sich auf das Gebiet der Fluorierung anorganischer Verbindungen, insbesonderer anorganischer Nichtmetallverbindungen

Wie auch bei organischen Verbindungen besitzen fluorierte anorganische Nichtmetallverbindungen, beispielsweise Phosphor, Selen oder Arsenverbindungen, eine große Bedeutung und es besteht stetiger Bedarf, Verfahren zur gezielten Synthese derartiger Verbindungen zu entwickeln.

Es ist somit eine Aufgabe, neuartige Verfahren zur Herstellung derartiger Verbindungen bereit zu stellen. Diese Aufgabe wird durch ein Verfahren gemäß Anspruch 1 gelöst.
Demgemäß wird ein Verfahren zur Herstellung von anorganischen
Nichtmetallfluorverbindungen bereitgestellt, umfassend den Schritt des Inkontaktbringens einer anorganischen Nichtmetallverbindung mit einer ionischen, SF₅⁻ enthaltenen Verbindung.

Überraschenderweise hat sich herausgestellt, dass auf diese Weise, oftmals in sehr guten Ausbeuten, fluorierte anorganische Nichtmetallverbindungen erhalten werden.

Weiterhin hat es sich herausgestellt, dass für die meisten Anwendungen der vorliegenden Erfindung einer oder mehrere der folgenden Vorteile erzielt werden kann:
- Das Verfahren kann bei Raumtemperatur durchgeführt werden und verlangt, im Gegensatz zu Fluorierungen mit elementarem Fluor, keine besonders aufwendige Apparatetechnik.
- Die verwendeten Edukte sind auf einfache Weise herstellbar bzw. oftmals sogar käuflich erwerblich
- Die Reaktionsprodukte sind auf einfache Weise isolierbar

Gemäß einer bevorzugten Ausführungsform umfasst dabei die anorganische Nichtmetallverbindung eine niedervalente anorganische Nichtmetallverbindung, d.h. dass Verfahren bezieht sich auf ein Verfahren zur Herstellung von anorganischen Nichtmetallfluorverbindungen, umfassend den Schritt des Inkontaktbringens einer niedervalenten anorganischen Nichtmetallverbindung mit einer ionischen, SF₅⁻ enthaltenen Verbindung. Besonders bevorzugt ist die anorganische Nichtmetallverbindung eine niedervalenten anorganische Nichtmetallverbindung oder besteht daraus.

Die vorliegende Erfindung bezieht sich somit insbesondere auf ein Verfahren zur Herstellung von anorganischen Nichtmetallfluorverbindungen bei gleichzeitiger zumindest formaler Oxidation, umfassend den Schritt des Inkontaktbringens einer niedervalenten anorganischen Nichtmetallverbindung mit einer ionischen, SF₅⁻ enthaltenen Verbindung.

Der Ausdruck "anorganische Nichtmetallverbindungen" beinhaltet und/oder umfasst dabei insbesondere Verbindungen, welche mindestens ein Element ausgewählt aus Bor sowie Elementen der 3. bis 5. Periode der Gruppen 13 bis 16 des Periodensystems der Elemente enthalten. Insbesondere bevorzugt sind dabei Bor, Phosphor, Schwefel, Selen, Arsen, Antimon, Tellur. Der Ausdruck "anorganische Nichtmetallverbindung" soll dabei auch explizit Nichtmetallelemente in elementarer Form umfassen, obwohl diese im allgemeinen Sprachgebrauch nicht als Verbindungen aufgefasst würden. Es sei weiterhin angemerkt, dass einige der vorgenannten Elemente teilweise auch als "Halbmetalle" bezeichnet werden. Der Ausdruck "Nichtmetall" soll - ggf. abweichend vom teilweise üblichen Sprachgebrauch - jedoch explizit all diese Elemente mit umfassen.

Der Ausdruck "niedervalente anorganische Nichtmetallverbindungen" beinhaltet und/oder umfasst dabei insbesondere Verbindungen, in denen das anorganische Nichtmetall in einer Oxidationsstufe unterhalb der üblicherweise höchsten Oxidationsstufe zukommt. Die jeweils höchsten Oxidationsstufen sind für einige bevorzugte Nichtmetalle in der folgenden Tabelle I aufgeführt:

**Tabelle I: Höchste Oxidationsstufen einiger bevorzugter anorganischer Nichtmetalle**

| **Nichtmetall** | **Höchste Oxidationsstufe** |
|---|---|
| Bor | +III |
| Phosphor | +V |
| Schwefel | +VI |
| Arsen | +V |
| Antimon | +V |
| Tellur | + VI |

Der Term "ionische, SF₅⁻ enthaltene Verbindung" bedeutet und/oder umfasst dabei insbesondere Verbindungen, bei denen Kationen und Anionen enthalten sind und SF₅⁻ eines dieser Anionen ist. Der Term "ionische, SF₅⁻ enthaltene Verbindung" ist dabei insbesondere nicht auf Verbindungen beschränkt, bei denen SF₅⁻ das einzige Anion ist. Besonders bevorzugt sind dabei Verbindungen der folgenden Struktur:
Q⁺ SF₅⁻ wobei Q⁺ ein organisches oder Phosphor enthaltendes Kation ist.
Bevorzugte Kationen Q⁺ sind dabei

### Organische Kationen:

Ammoniumionen insbesondere quarternäre Ammoniumionen, substituierte und unsubstituierte Tritylverbindungen

### Phosphor enthaltende Kationen:

Kationen der Struktur [PR¹R²R³F]⁺ wobei R¹ bis R³ unabhängig voneinander ausgewählt sind aus: substituiertes und unsubstituiertes Aryl, substituiertes und unsubstituertes Amin (wobei die Bindung zum Phosphor über das Stickstoffatom verläuft), dabei insbesondere Imidazolimin sowie substituiertes und unsubstituiertes Guanidin (wobei die Bindung zum Phosphor über eines der Stickstoffatome verläuft). Besonders bevorzugt sind Guanidine, dabei insbesondere Verbindungen, bei denen zwischen zwei der Stickstoffatome eine C₂-oder C₃-Brücke besteht.

Bevorzugt hat einer oder mehrere der Reste R₁ bis R₃ die folgende Struktur: 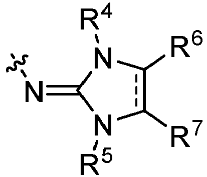 wobei R⁴ bis R⁷ unabhängig voneinander ausgewählt sind aus Wasserstoff, Alkyl, Aryl und zwei der Reste, bevorzugt R⁶ und R⁷ miteinander einen Ring bilden können, so dass ein aromatischer oder aliphatischer 5- oder 6-Ring entsteht. Die Bindung zwischen R⁶ und R⁷ kann eine Einfach- oder (formale) Doppelbindung sein.

Bevorzugt sind die Reste R¹ bis R³ identisch.

Weiterhin bevorzugt sind Verbindungen der folgenden Struktur:
T²⁺ F⁻ SF₅⁻ wobei T²⁺ ein organisches oder Phosphor enthaltendes Kation ist.

Bevorzugte Kationen T²⁺ sind dabei von den folgenden Neutralverbindungen nach zweifacher Oxidation abgeleitet:

### Organische Kationen:

Bipyrylidenverbindungen, insbesondere 2,2'-Bipyridylenverbindungen, 2,4'-Bipyridylenverbindungen und 4,4'-Bipyridylenverbindungen. Bevorzugt befindet sich dabei ein Alkylrest an den beiden Stickstoffen der Bipyrylidenverbindung.

Tetrakisaminoethylen- oder Tetrakissulfidethylenverbindungen wobei die Stickstoff bzw. Schwefelatome noch Alkyl oder Aryl substiuiert sein können oder zwischen zwei geeigneten Stickstoff oder Schwefelatomen eine weitere Ethylenbrücke bestehen kann.;

Diaminophenylverbindungen, wobei die Stickstoffatome noch Alkyl oder Aryl substiuiert sein können, besonders bevorzugt sind 1,2 und 1,4- Diaminophenylverbindungen
Das Verfahren wird gemäß einer alternativen Ausführungsform in einem Lösemittel durchgeführt, dabei sind polar, aprotische Lösemittel besonders bevorzugt, darunter am meisten bevorzugt DMSO, DMF, THF und Mischungen daraus.

Das Verfahren wird gemäß einer alternativen Ausführungsform unter Schutzgasatmosphäre durchgeführt.

Die ionische, SF₅⁻ enthaltene Verbindung kann als Reagenz verwendet werden, jedoch ist es alternativ auch möglich, diese in situ zu erzeugen.

Demgemäß ist es eine bevorzugte Ausführungsform der vorliegenden Erfindung, dass das Verfahren einen weiteren Schritt umfasst:
- Herstellen einer ionischen, SF₅⁻ enthaltenen Verbindung ausgehend von geeigneten Vorläufersubstanzen
welcher vor oder gleichzeitig mit dem ersten Verfahrensschritt durchgeführt werden kann.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Beispiele, in denen - beispielhaft - mehrere Ausführungsbeispiele des erfindungsgemäßen Verfahrens dargestellt sind.

### Beispiel 1: Synthese eines Pentafluorselenat-Anions

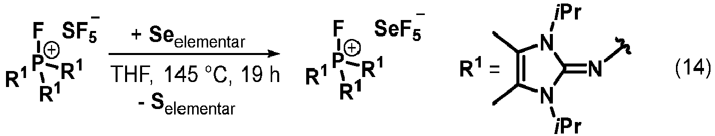

In einem Schlenkrohr wurden das Phosphonium-Salz (40 mg), welches das SF₅⁻ Anion enthält, und elementares Selen (5 mg) vorgelegt und THF (2 mL) zugegeben. Das Gemisch wurde für 19 h bei 145°C erhitzt. Überschüssiges Selen wurde abfiltriert. Nach Zugabe von *n*-Hexan (10 mL) wurde ein kristalliner Feststoff erhalten, der anschließend mit Diethylether (3 x 1 mL) gewaschen wurde. Das SeF₅⁻ Salz wurde als bräunlicher Feststoff in einer Ausbeute von 70 % isoliert.
¹⁹F-NMR (300 K, 376 MHz, THF + C₆D₆) δ(ppm): 55.2 (p, ²*J*_{FF} = 29.3 Hz), 17.6 (d, ²*J*_{FF} = 29,3 Hz), -36.5 (d, ¹*J*_{PF} =912.0 Hz).
³¹P-NMR (300 K, 161 MHz, THF+ C₆D₆) δ(ppm):-60.3 (d, ¹*J*_{PF} = 912.0 Hz)

### Beispiel 2: Synthese eines Pentafluorselenat-Anions

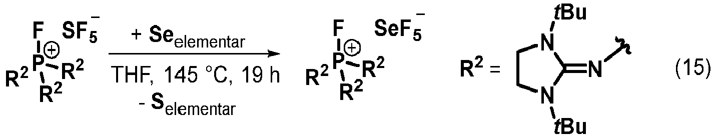

In einem Schlenkrohr wurden Phosphonium-Salz (50 mg), welches das SF₅⁻ Anion enthält, und elementares Selen (5 mg) vorgelegt und THF (2 mL) zugegeben. Das Gemisch wurde für 20 h bei 120 °C erhitzt. Überschüssiges Selen wurde abfiltriert. Nach Zugabe von *n*-Hexan (15 mL) wurde ein kristalliner Feststoff erhalten, der anschließend mit Diethylether (3 x 1 mL) gewaschen wurde. Das SeF₅⁻ Salz wurde als bräunlicher Feststoff in einer Ausbeute von 59 % isoliert.
¹⁹F-NMR (300 K, 376 MHz, THF + C₆D₆) δ(ppm): 55.75 (p, ²*J*_{FF} = 29.6 Hz), 17.88 (d, ²*J*_{FF} = 29,6 Hz),-36.45 (d, ¹*J*_{PF} =910.8 Hz).
³¹P-NMR (300 K, 161 MHz, THF+ C₆D₆) δ(ppm):-60.3 (d, ¹*J*_{PF} = 910.8 Hz)

### Beispiel 3: Synthese eines Pentafluortellurat-Anions

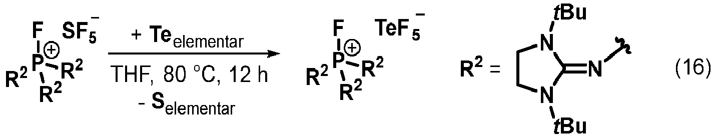

In einen Schlenkrohr wurden Phosphonium-Salz (50 mg), welches das SF₅⁻ Anion enthält, und elementares Tellur (5 mg) vorgelegt und THF (2 mL) zugegeben. Das Gemisch wurde für 20 h bei 80°C erhitzt. Überschüssiges Tellur wurde abfiltriert. Nach Zugabe von *n*-Hexan (15 mL) wurde ein kristalliner Feststoff erhalten, der anschließend mit Diethylether (3 x 1 mL) gewaschen wurde. Das TeF₅⁻ Salz wurde als weißer Feststoff in einer Ausbeute von 77 % erhalten.
¹⁹F-NMR (300 K, 376 MHz, THF + C₆D₆) δ(ppm): -37.7 (d, ²*J*_{FF} = 50.4 Hz), -32.6 (p, ²*J*_{FF} = 50.4 Hz), - 36.42 (d, ¹*J*_{PF} =910.8 Hz)
³¹P-NMR (300 K, 161 MHz, THF + C₆D₆) δ(ppm): -60.35 (d, ¹*J*_{PF} = 910.8 Hz)
Durch Diffusion von *n*-Hexan in eine gesättigte Lösung des Produktes in THF konnten nach 24 h Kristalle erhalten werden und die Molekülstruktur aufgeklärt werden.

### Beispiel 4: Synthese eines Hexafluorantimonat-Anions

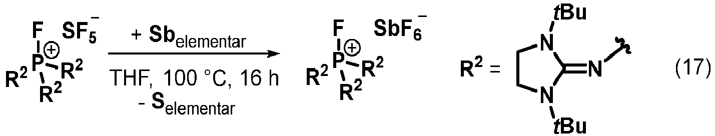

In einen Schlenkrohr wurden Phosphonium-Salz (50 mg), welches das SF₅⁻ Anion enthält, und elementares Antimon (5 mg) vorgelegt und THF (2 mL) zugegeben. Das Gemisch für 19 h bei 100 °C erhitzt. Überschüssiges Antimon wurde abfiltriert. Nach Zugabe von *n*-Hexan (15 mL) wurde ein kristalliner Feststoff erhalten, der anschließend mit Diethylether (3 x 1 mL) gewaschen wurde. Das SbF₆⁻ Salz wurde als bläulicher Feststoff in einer Ausbeute von 61 % erhalten.
¹⁹F-NMR (300 K, 376 MHz, THF + C₆D₆) δ(ppm): -36.26 (d, ¹*J*_{PF} = 910 Hz), - 63.35 (s), -124.38 (m)
³¹P-NMR (300 K, 161 MHz, THF + C₆D₆) δ(ppm): -60.63 (d, ¹*J*_{PF} = 910 Hz)
HRMS (ESI): m/z berechnet für [C₃₃H₆₆N₆FP]⁺ 638.51573, gefunden: 638.517, m/z berechnet für [SbF₆]⁻ 234.89479, gefunden 234.89451.
Durch Diffusion von *n*-Hexan in eine gesättigte Lösung des Produktes in THF konnten nach 24 h Kristalle erhalten werden und die Molekülstruktur aufgeklärt werden.

### Beispiel 5: Synthese eines Hexafluorphosphat-Anions

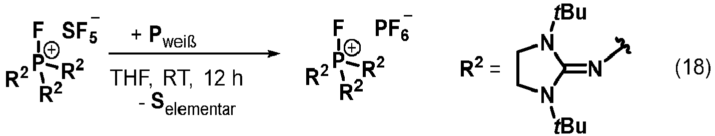

Unter Argon-Atmosphäre wurden in ein NMR-Rohr Phosphonium-Salz (25 mg), welches das SF₅⁻ Anion enthält, und elementarer Phosphor (P₄, 5 mg) vorgelegt und THF (0,5 mL) zugegeben. Die Reaktionsmischung im NMR-Rohr wurde nach 12 h bei Raumtemperatur NMR-spektrokopisch analysiert. Es wurde ein vollständiger Umsatz des eingesetzten Phosphonium-Salzes beobachtet und die beobachteten Resonanzen im ³¹P und ¹⁹F-NMR Spektrum sind indikativ (vgl. mit Literaturangaben) für die Bildung des Hexafluorophosphat-Anions.
¹⁹F-NMR (300 K, 376 MHz, THF + C₆D₆) δ(ppm): -36.26 (d, ¹*J*_{PF} = 910.0 Hz), - 73.57 (d, ¹*J*_{PF} = 710.6 Hz)
³¹P-NMR (300 K, 161 MHz, THF + C₆D₆) δ(ppm): -60.63 (d, ¹*J*_{PF} = 910.0 Hz), -144,27 (sept, ¹*J*_{PF} = 710.6 Hz)

### Beispiel 6: Synthese eines Tetrafluorarsenat-Anions

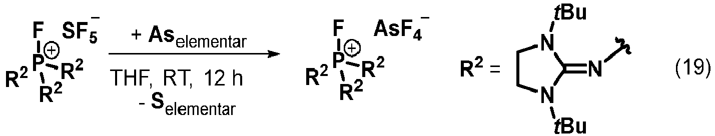

In einen Schlenkrohr wurden Phosphonium-Salz (50 mg), welches das SF₅⁻ Anion enthält, und elementares Arsen (5 mg) vorgelegt und THF (4 mL) zugegeben. Das Reaktionsgemisch wurde für 24 h bei 100 °C erhitzt. Überschüssiges Arsen wurde abfiltriert. Nach Zugabe von *n*-Hexan (15 mL) wurde ein kristalliner Feststoff erhalten, der anschließend mit Diethylether (3 x 1 mL) gewaschen wurde. Das AsF₄⁻ Salz wurde als weißer Feststoff in einer Ausbeute von 54 % erhalten.
¹⁹F-NMR (300 K, 376 MHz, THF + C₆D₆) δ(ppm): -36.34 ¹*J*_{PF} = 910 Hz), -47.57 (bm). ³¹P-NMR (300 K, 161 MHz, THF + C₆D₆) δ(ppm): -60.5 (d, ¹*J*_{PF} = 910 Hz).
Durch Diffusion von *n*-Hexan in eine gesättigte Lösung des Produktes in THF konnten nach 24 h Kristalle erhalten werden und die Molekülstruktur aufgeklärt werden.

### Beispiel 7: Synthese eines Alkylpentafluorphosphat-Anions

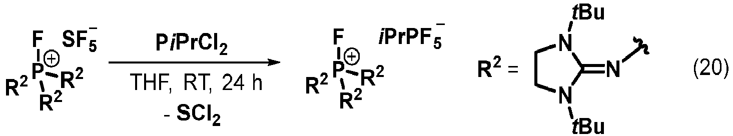

In einen Schlenkrohr wurde Phosphonium-Salz (50 mg), welches das SF₅⁻ Anion enthält, vorgelegt und THF (2 mL) zugegeben. Im Argon-Gegenstrom wurden bei RT P(*i*Pr)Cl₂ (0.12 ml) zugetropft. Die Reaktionsmischung wurde 24 h bei Raumtemperatur gerührt und anschließend das Lösungsmittel im Vakuum entfernt. Der Rückstand wurde mit Hexan gewaschen (3x 1 ml) und in THF aufgenommen. Nach Zugabe von *n*-Hexan (15 mL) wurde das *i*PrPF₅⁻ Salz als kristalliner Feststoff in einer Ausbeute von 84% erhalten.
¹⁹F-NMR (300 K, 376 MHz, THF + C₆D₆): -61,52 (dq, ¹*J*_{PF} = 673.6, ¹*J*_{FF} =33.3 Hz), -65.36 (dd, ¹*J*_{PF}= 870.9 Hz, ¹J_{FF} =33.6 Hz).
³¹P-NMR (300 K, 161 MHz, THF + C₆D₆) -60.32 (¹*J*_{PF} = 911 Hz).
Durch Diffusion von *n*-Hexan in eine gesättigte Lösung des Produktes in THF konnten nach 24 h Kristalle erhalten werden und die Molekülstruktur aufgeklärt werden.

### Beispiel 8: Synthese eines Hexafluorphosphat-Anions

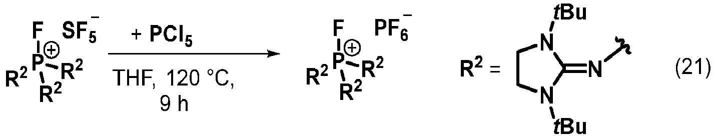

Unter Argon-Atmosphäre wurden in ein NMR-Rohr Phosphonium-Salz (25 mg), welches das SF₅⁻ Anion enthält, und Phosphorpentachlorid (1 Äq.) vorgelegt und THF (0,5 mL) zugegeben. Die Reaktionsmischung im NMR-Rohr wurde nach 9 h bei 120 °C NMR-spektrokopisch analysiert. Es wurde ein vollständiger Umsatz des eingesetzten Phosphonium-Salzes beobachtet und die beobachteten Resonanzen im ³¹P und ¹⁹F-NMR Spektrum sind indikativ (vgl. mit Literaturangaben) für die Bildung des Hexafluorphosphat-Anions.
¹⁹F-NMR (300 K, 376 MHz, THF + C₆D₆) -36.26 (d, ¹*J*_{PF} = 910.0 Hz), - 73.57 (d, ¹*J*_{PF} = 710.6 Hz)
³¹P-NMR (300 K, 161 MHz, THF + C₆D₆) -60.63 (d, ¹*J*_{PF} = 910.0 Hz), -144,27 (sept, ¹*J*_{PF} = 710.6 Hz)

### Beispiel 9: Synthese eines Hexafluorphosphat-Anions

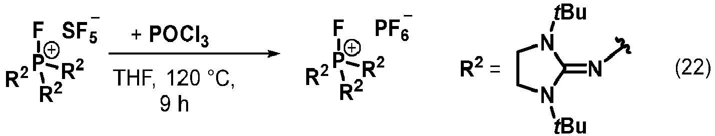

Unter Argon-Atmosphäre wurden in ein NMR-Rohr Phosphonium-Salz (25 mg), welches das SF₅⁻ Anion enthält, und Phosphoroxychlorid (1 Äq.) vorgelegt und THF (0,5 mL) zugegeben. Die Reaktionsmischung im NMR-Rohr wurde nach 9 h bei 120 °C NMR-spektroskopisch analysiert. Es wurde ein vollständiger Umsatz des eingesetzten Phosphonium-Salzes beobachtet und die beobachteten Resonanzen im ³¹P und ¹⁹F-NMR Spektrum sind indikativ (vgl. mit Literaturangaben) für die Bildung des Hexafluorphosphat-Anions.
¹⁹F-NMR (300 K, 376 MHz, THF + C₆D₆) -36.26 (d, ¹*J*_{PF} = 910.0 Hz), - 73.57 (d, ¹*J*_{PF} = 710.6 Hz)
³¹P-NMR (300 K, 161 MHz, THF + C₆D₆) -60.63 (d, ¹*J*_{PF} = 910.0 Hz), -144,27 (sept, ¹*J*_{PF} = 710.6 Hz)

### Beispiel 10: Synthese eines Dialkyl-trifluor-phosphorans

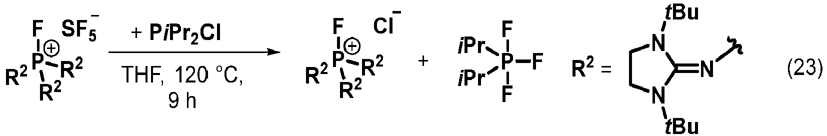

Unter Argon-Atmosphäre wurden in einem NMR-Rohr Phosphonium-Salz (25 mg), welches das SF₅⁻ Anion enthält, und Diisopropylchlorophosphan (1 Äq.) vorgelegt und THF (0,5 mL) zugegeben. Die Reaktionsmischung im NMR-Rohr wurde nach 9 h bei 120 °C NMR-spektrokopisch analysiert. Es wurde ein vollständiger Umsatz des eingesetzten Phosphonium-Salzes beobachtet und die beobachteten Resonanzen im ³¹P und ¹⁹F-NMR Spektrum sind indikativ für die Bildung des *Di*isopropyl-*tri*fluor-phosphorans.
¹⁹F-NMR (300 K, 376 MHz, THF + C₆D₆) -36.26 (d, ¹*J*_{PF} = 910.0 Hz), - 45.32 (dd, ²*J*_{FF} = 29.3 Hz, ¹*J*_{PF} = 850.4 Hz), -97,64 (dt, ²*J*_{FF} = 29.3 Hz, ¹*J*_{PF} = 983.2 Hz)
³¹P-NMR (300 K, 161 MHz, THF + C₆D₆) -60.63 (d, ¹*J*_{PF} = 910.0 Hz), 5,2 (dt, ¹*J*_{PF} = 850.4 Hz, ¹*J*_{PF} = 983.2 Hz)

### Beispiel 11: Synthese eines Aryl-trifluor-borats

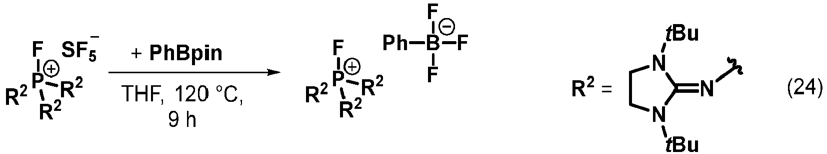

Unter Argon-Atmosphäre wurden in ein NMR-Rohr Phosphonium-Salz (25 mg), welches das SF₅⁻ Anion enthält, und Phenylboronsäure-Pinacolester (1 Äq.) vorgelegt und THF (0,5 mL) zugegeben. Die Reaktionsmischung im NMR-Rohr wurde nach 9 h bei 120 °C NMR-spektrokopisch analysiert. Es wurde ein vollständiger Umsatz des eingesetzten Phosphonium-Salzes beobachtet und die beobachtete Resonanz im ³¹P-NMR Spektrum ist indikativ für die Bildung des Phenyl-*tri*fluor-borans (Magn. Reson. Chem. 2009, 47, 873-878).
¹⁹F-NMR (300 K, 376 MHz, THF + C₆D₆) -36.26 (d, ¹*J*_{PF} = 910.0 Hz), - 144.67 (q (breit) ¹*J*_{BF} = 44.0 Hz)
³¹P-NMR (300 K, 161 MHz, THF + C₆D₆) δ(ppm): -60.63 (d, ¹*J*_{PF} = 910.0 Hz) ¹¹B(¹H)-NMR (300 K, 161 MHz, THF + C₆D₆) δ(ppm): 3.7 (breit)

### Beispiel 12: Synthese eines Dialkyl-trifluor-phosphorans

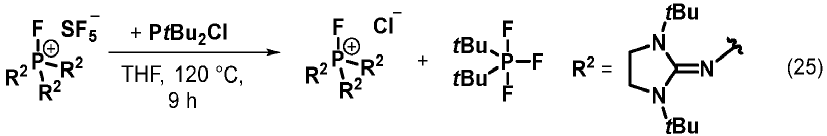

Unter Argon-Atmosphäre wurden in einem NMR-Rohr Phosphonium-Salz (25 mg), welches das SF₅⁻ Anion enthält, und Ditertbutylchlorophosphan (1 Äq.) vorgelegt und THF (0,5 mL) zugegeben. Die Reaktionsmischung im NMR-Rohr wurde nach 9 h bei 120 °C NMR-spektrokopisch analysiert. Es wurde ein vollständiger Umsatz des eingesetzten Phosphonium-Salzes beobachtet und die beobachteten Resonanzen im ³¹P und ¹⁹F-NMR Spektrum sind indikativ für die Bildung des *Di*tertbutyl-*tri*fluor-phosphorans.
¹⁹F-NMR (300 K, 376 MHz, THF + C₆D₆) δ(ppm): -36.26 (d, ¹*J*_{PF} = 910.0 Hz), - 47.41 (d (breit) ¹*J*_{PF} = 916.9 Hz), -93,73 (d (breit), ¹*J*_{PF} = 960.0 Hz)
³¹P-NMR (300 K, 161 MHz, THF + C₆D₆) δ(ppm): -60.63 (d, ¹*J*_{PF} = 910.0 Hz), 5,2 (d (breit))

### Beispiel 13: Synthese eines Triaryl-difluor-phosphorans

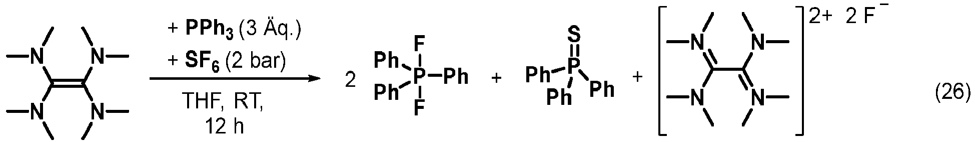

Unter Argon-Atmosphäre wurden in einem NMR-Rohr Tetrakis(dimethylamino)ethylene (25 mg) und Triphenylphosphin (3 Äq.) in THF gelöst. Die Reaktionsmischung im NMR-Rohr wurde nach 12 h bei RT NMR-spektrokopisch analysiert. Es wurde ein vollständiger Umsatz des eingesetzten Triphenylphosphins beobachtet und die beobachteten Resonanzen im ³¹P und ¹⁹F-NMR Spektrum sind indikativ für die Bildung von Difluor-phosphorans und Triphenylphosphansulfid.
¹⁹F-NMR (300 K, 376 MHz, THF + C₆D₆) δ(ppm): -40.6 (d, ¹*J*_{PF} = 670 Hz)
³¹P-NMR (300 K, 161 MHz, THF + C₆D₆) δ(ppm): 42.27 (s), -55.30 (t, ¹*J*_{PF} = 670 Hz)

Die einzelnen Kombinationen der Bestandteile und der Merkmale von den bereits erwähnten Ausführungen sind exemplarisch; der Austausch und die Substitution dieser Lehren mit anderen Lehren, die in dieser Druckschrift enthalten sind mit den zitierten Druckschriften werden ebenfalls ausdrücklich erwogen. Der Fachmann erkennt, dass Variationen, Modifikationen und andere Ausführungen, die hier beschrieben werden, ebenfalls auftreten können ohne von dem Erfindungsgedanken und dem Umfang der Erfindung abzuweichen. Entsprechend ist die obengenannte Beschreibung beispielhaft und nicht als beschränkend anzusehen. Das in den Ansprüchen verwendete Wort "umfassen" schließt nicht andere Bestandteile oder Schritte aus. Der unbestimmte Artikel "ein" schließt nicht die Bedeutung eines Plurals aus. Die bloße Tatsache, dass bestimmte Maße in gegenseitig verschiedenen Ansprüchen rezitiert werden, verdeutlicht nicht, dass eine Kombination von diesen Maßen nicht zum Vorteil benutzt werde kann. Der Umfang der Erfindung ist in den folgenden Ansprüchen definiert und den dazugehörigen Äquivalenten.

## Patentansprüche

1. Verfahren zur Herstellung von anorganischen Nichtmetallfluorverbindungen, umfassend den Schritt des Inkontaktbringens einer niedervalenten anorganischen Nichtmetallverbindung mit einer ionischen, SF₅⁻ enthaltenen Verbindung.

2. Verfahren gemäß Anspruch 1, wobei die anorganische Nichtmetallfluorverbindung eine niedervalente anorganische Nichtmetallfluorverbindung umfasst.

3. Verfahren nach Anspruch 1 oder 2, wobei gleichzeitig eine zumindest formale Oxidation erfolgt.

4. Verfahren nach einem der Ansprüche 1 bis 3, wobei die anorganische Nichtmetallverbindung mindestens ein Element ausgewählt aus Bor sowie Elementen der 3. bis 5. Periode der Gruppen 13 bis 16 des Periodensystems der Elemente enthält.

5. Verfahren nach einem der Ansprüche 1 bis 4, wobei die anorganische Nichtmetallverbindung mindestens ein Element ausgewählt aus der Gruppe Bor, Phosphor, Schwefel, Selen, Arsen, Antimon, Tellur enthält.

6. Verfahren nach einem der Ansprüche 1 bis 5, wobei die ionische, SF₅⁻ enthaltenen Verbindung eine Verbindung der folgenden Strukturen umfasst:
Q⁺ SF₅⁻ wobei Q⁺ ein organisches oder Phosphor enthaltendes Kation ist;
T²⁺ F⁻ SF₅⁻ wobei T²⁺ ein organisches oder Phosphor enthaltendes Kation ist.

7. Verfahren nach einem der Ansprüche 1 bis 6, wobei Q⁺ ausgewählt ist aus der Gruppe enthaltend quarternäre Ammoniumsalze, substituierte und unsubstituierte Tritylverbindungen, Kationen der Struktur PR¹R²R³F⁺ wobei R¹ bis R³ unabhängig voneinander ausgewählt sind aus: substituiertes und unsubstituiertes Aryl, substituiertes und unsubstituertes Amin (wobei die Bindung zum Phosphor über das Stickstoffatom verläuft), dabei insbesondere Imidazolimin sowie substituiertes und unsubstituiertes Guanidin (wobei die Bindung zum Phosphor über eines der Stickstoffatom verläuft)

8. Verfahren nach einem der Ansprüche 1 bis 7, wobei T²⁺ ausgewählt ist aus der Gruppe enthaltend Bipyridylenverbindungen, Tetrakisaminoethylen- oder Tetrakissulfidethylenverbindungen, wobei die Stickstoff bzw. Schwefelatome noch Alkyl oder Aryl substiuiert sein können oder zwischen zwei geeigneten Stickstoff oder Schwefelatomen eine weitere Ethylenbrücke bestehen kann; Diaminophenylverbindungen, wobei die Stickstoffatome noch Alkyl oder Aryl substiuiert sein können

9. Verfahren nach einem der Ansprüche 1 bis 8, wobei das Verfahren unter Schutzgasatmosphäre durchgeführt wird.

10. Verfahren nach einem der Ansprüche 1 bis 9, umfassend einen weiteren Reaktionsschritt:
- Herstellen einer ionischen, SF₅⁻ enthaltenen Verbindung ausgehend von geeigneten Vorläufersubstanzen
welcher vor oder gleichzeitig mit dem ersten Verfahrensschritt durchgeführt werden kann.
